# EUROPÄISCHE PATENTSCHRIFT

(11) **EP 2 960 024 B1**
(45) Veröffentlichungstag und Bekanntmachung des Hinweises auf die Patenterteilung: **09.12.2020**
(21) Anmeldenummer: 15171880.6
(22) Anmeldetag: 12.06.2015
(51) Int. Cl.: B25J 15/06, F04F 5/52

(54) **ANLAGE ZUR HANDHABUNG VON WERKSTÜCKEN**
INSTALLATION FOR HANDLING WORKPIECES
INSTALLATION DE MANIPULATION DE PIECES A USINER

(30) Priorität: 26.06.2014 DE 102014212331
(43) Veröffentlichungstag der Anmeldung: 30.12.2015
(73) Patentinhaber: J. Schmalz GmbH, 72293 Glatten (DE)
(72) Erfinder: Dunkmann, Walter, 76530 Baden-Baden (DE); Holecek, Thomas, 72250 Freudenstadt (DE)
(74) Vertreter: DREISS Patentanwälte PartG mbB

(56) Entgegenhaltungen:
- DE-A1-102004 031 924
- DE-A1-102004 047 853
- DE-A1-102007 058 114
- DE-T2- 69 232 566

## Beschreibung

Die Erfindung betrifft eine Anlage zur Handhabung von Werkstücken gemäß dem Oberbegriff des Anspruchs 1.

Derartige Anlagen können z.B. in Produktionsstraßen oder Bearbeitungsstraßen zum Einsatz kommen. Die Anlagen umfassen insbesondere eine Handhabungsvorrichtung, mittels der ein Werkstück fixiert oder gegriffen werden kann. Dabei kann die Handhabungsvorrichtung selbst komplex aufgebaut sein, z.B. eine Mehrzahl von Unterdruckgreifern umfassen. Ferner ist oftmals ein Aktuator vorgesehen, z.B. ein Roboterarm, welcher mit der Handhabungsvorrichtung gekoppelt ist, um diese zu bewegen.

Die vorliegende Erfindung betrifft insbesondere pneumatisch betriebene Systeme, welche wenigstens einen (z.B. mittels Druckluft angetriebenen) Unterdruckerzeuger aufweisen, welcher die Handhabungsvorrichtungen (z.B. Unterdruckgreifern) mit dem nötigen Unterdruck versorgt. Beim Betrieb solcher Systeme müssen die einzelnen Funktionseinheiten aufeinander abgestimmt sein. Insbesondere müssen die Betriebsdaten der Handhabungsvorrichtung bekannt sein, um sie mit dem Unterdruckerzeuger bedarfsgerecht mit Unterdruck versorgen zu können. Hierzu ist es z.B. bekannt, die Unterdruckerzeuger über ein Bussystem mit einer zentralen Steuereinrichtung zu verbinden. Diese generiert und übermittelt den Unterdruckerzeugern Steuersignale, um sie prozessgerecht anzusteuern. Um dies zu ermöglichen, müssen auch die an den Unterdruckerzeugern angeschlossenen Handhabungsvorrichtungen an der zentralen Steuerung angemeldet sein, so dass auf ihre Betriebsparametern und Zustandsinformationen zugegriffen werden kann. Ein Auswechseln der Handhabungsvorrichtung in der Anlage macht daher Konfigurationsarbeiten erforderlich. Ein Umrüsten der Anlage ist oftmals mit unerwünscht langen Stillstandzeiten verbunden.

Eine Anlage mit den Merkmalen des Oberbegriffs des Anspruchs 1, welche Ejektoren und Greifvorrichtungen umfasst, ist in der DE 10 2004 031 924 A1 beschrieben.

Der Erfindung liegt die Aufgabe zugrunde, eine zuverlässig betreibbare und überwachbare Anlage zur Handhabung von Werkstücken bereitzustellen, welche flexibel umgerüstet werden kann.

Diese Aufgabe wird durch eine Anlage zur Handhabung von Werkstücken gemäß Anspruch 1 gelöst. Die Anlage umfasst mehrere Funktionseinheiten, die z.B. baugruppenartig zusammengefasst sein können:
- eine Handhabungsvorrichtung, die der eigentlichen Handhabung (d.h. Fixieren oder Greifen) des Werkstückes dient und welche zum Ansaugen des Werkstückes wenigstens einen Unterdruckgreifer umfasst;
- wenigstens einen mittels Druckluftzufuhr betreibbaren Unterdruckerzeuger, welcher zur Versorgung der Unterdruckgreifer mit dem erforderlichen Unterdruck dient;
- wenigstens ein ansteuerbares Steuerventil zur Steuerung der Druckluftzufuhr für den Unterdruckerzeuger. Das Steuerventil wirkt insofern zwischen einem zentralen Druckluftversorgungssystem der Anlage und dem Unterdruckerzeuger;
- eine Steuereinrichtung, welche dazu ausgebildet ist das Steuerventil bedarfsgerecht anzusteuern und welche dem Steuerventil zugeordnet ist.

An der Handhabungsvorrichtung selbst ist eine Auswerteeinheit angeordnet, welche dazu ausgebildet ist, Betriebsdaten des Unterdruckerzeugers und/oder Betriebsdaten der Handhabungsvorrichtung auszuwerten und in Abhängigkeit der ausgewerteten Betriebsdaten Steuersignale zu erzeugen. Dabei wirkt die Steuereinrichtung mit dem Steuerventil derart zusammen, dass dem Steuerventil die Steuersignale übermittelt werden und das Steuerventil in Abhängigkeit dieser Steuersignale angesteuert wird.

Somit wird nur das Steuerventil, das dem Unterdruckerzeuger fluidisch vorgeschaltet ist, direkt von der Auswerteeinheit angesteuert. Es ist insofern nicht zwingend nötig, den komplexeren Unterdruckerzeuger von einer zentralen Steuereinrichtung der Anlage anzusteuern, wie dies bei bekannten Anlagen der Fall ist. Der Steuerungsvorgang ist daher weniger komplex. Das Steuerventil erhält die Steuersignale direkt von der zugeordneten Auswerteeinheit, die die Steuersignale aus den Betriebsdaten ermittelt. Es erfolgt also eine dezentrale Ansteuerung des Steuerventils. Die anspruchsgemäße Ausstattung ermöglicht es, den oder die Unterdruckerzeuger nahe an dem wenigstens einen Unterdruckgreifer anzuordnen. Daher sind die erforderlichen Wege für Druckluftleitungen und Unterdruckleitungen kurz. Für Änderungen des Unterdruckzustandes in den Unterdruckgreifern müssen daher nur kurze Leitungsabschnitte evakuiert und/oder druckbeaufschlagt werden, was zu deutlich verkürzten Reaktionszeiten führt. Insbesondere kann die Evakuierungszeit für den wenigstens einen Unterdruckgreifer zum Greifen eines Werkstückes deutlich verkürzt werden.

Da die Betriebsdaten direkt in der Auswerteeinheit verarbeitet werden, ist es nicht erforderlich, störanfällige Analogsignale (welche die Betriebsdaten repräsentieren) mittels langer Datenleitungen zu einer zentralen Steuereinrichtung zu Übertragen. Stattdessen können kurze Datenleitungen zwischen Auswerteeinheit und Unterdruckerzeuger und/oder Handhabungsvorrichtung bzw. entsprechenden Sensoren verwendet werden. Dies führt zu einem zuverlässigen Betrieb und außerdem zu Kostenersparnis durch die eingesparten Datenleitungen. Außerdem wertet die Auswerteeinheit lokal an der Handhabungsvorrichtung die jeweiligen Daten aus und steuert das Steuerventil insbesondere mittels Digitalsignalen (z.B. Ein- und Ausschaltzeitpunkte für die Medienversorgung) an. Die Anlagensteuerung kann damit vereinfacht werden.

Beim Umrüsten der Anlage (z.B. Austausch der Handhabungsvorrichtung) kann der Konfigurations- und Inbetriebsnahmeprozess deutlich vereinfacht werden, da die relevanten Informationen aus der Auswerteeinheit ausgelesen werden können, die direkt an der Handhabungsvorrichtung angeordnet ist.

Der Aufbau der Anlage ist außerdem vorteilhaft gegenüber Systemen, bei welchen die Handhabungsvorrichtung mittels einer zentralen Unterdruckversorgung erfolgt, also nicht über zugeordnete Unterdruckerzeuger. Dabei wird durch Leitungen der Unterdruck (anstelle von Druckluft) bereitgestellt. Insbesondere bei langen Unterdruckleitungen können Änderungen im Unterdruckniveau nur vergleichsweise langsam übertragen werden. Es sind daher nur vergleichsweise langsame Prozesse (z.B. Aufnehmen und Loslassen eines Werkstückes) möglich. Zur Erhöhung der Produktivität ist jedoch oftmals eine schnell ablaufende Handhabung möglich, insbesondere in Anwendungsgebieten wie der Automation von Pressen oder Stanzen. Bei der vorliegenden Anlage ist es möglich, die Unterdruckerzeugung nahe an den Unterdruckgreifern vorzunehmen und mittels der Steuerventile nur Druckluftversorgung an- und auszuschalten. Dies kann deutlich schneller erfolgen, als die globale Steuerung von Unterdruck.

Grundsätzlich können die Betriebsdaten verschiedenartige Informationen repräsentieren z.B. Druck, Volumentstrom von Druckluft, oder mit Sensoren erfasste pneumatische Daten. Denkbar ist auch die Verwendung von Zustandsdaten, welche den aktuellen Betriebszustand wiedergeben und/oder eine Überwachung der Funktionalität erlauben, z.B. einen Volumenstrom der durch die Handhabungsvorrichtung durchströmenden Luft, eine Zykluszahl, usw.. Es kann sich auch um Kenngrößen der Handhabungsvorrichtung handeln, mittels welchen der Unterdruckerzeuger eine funktionsgerechte Unterdruckversorgung vornehmen kann, z.B. ein typischer Schwelldruck, typische Evakuierungszeit, ein aktueller Energieverbrauch, oder ein maximal erreichter Unterdruck in der Handhabungsvorrichtung als Maß für die Dichtheit des Systems. Schließlich können die Betriebsdaten auch Identifizierungsdaten sein, welche eine individuelle Einordnung der Handhabungsvorrichtung ermöglichen, und z.B. Informationen über den Typ der angeschlossenen Handhabungsvorrichtung beinhalten. Beim Wechsel der Handhabungsvorrichtung oder bei einem weiteren Ausbau der Anlage kann dann ein aufwändiges Anmelden der neu zugefügten Handhabungsvorrichtung an einer zentralen Steuerung entfallen. Die Anlage kann flexibel erweitert werden, ohne dass aufwändige Programmierungen oder Datenpflege notwendig ist.

Die Handhabungsvorrichtung umfasst einen Träger oder ein Gerüst, an welchem die Unterdruckgreifer angeordnet sind. Die Handhabungsvorrichtung kann z.B. in der Art einer sogenannten Saugerspinne ausgebildet sein, mit mehreren Sauggreifern, die an in verschiedene Richtungen abragenden Trägerabschnitten angeordnet sind. Dadurch können auch großflächige Werkstücke mit unebenen Oberflächenkonturen gegriffen werden.

An dem Träger der Handhabungsvorrichtung können auch weitere Komponenten angeordnet sein.

Der Träger der Handhabungsvorrichtung ist lösbar bzw. auswechselbar mit einem entsprechenden Halteabschnitt der Anlage befestigbar ausgebildet. Der Halteabschnitt der Anlage wird z.B. von einem Endabschnitt eines Roboterarmes gebildet, an welchem die Handhabungsvorrichtung befestigt wird und mit welchem die Handhabungsvorrichtung bewegbar ist. Insbesondere ist der Halteabschnitt der Anlage ein Endabschnitt eines Aktuators zur Bewegung der Handhabungsvorrichtung.

Der Unterdruckerzeuger ist nicht an dem Träger der Handhabungsvorrichtung, sondern an einem anderen Abschnitt der Anlage befestigt, nämlich an dem genannten Halteabschnitt der Anlage. Dies ermöglicht es, einen gemeinsamen Unterdruckerzeuger für die an dem Träger angeordneten Komponenten bereitzustellen.

Grundsätzlich können das Steuerventil und der Unterdruckerzeuger zu einer Baugruppe verbunden sein, d.h. das Steuerventil kann direkt an dem Unterdruckerzeuger angeordnet sein und/oder in einem gemeinsamen Gehäuseabschnitt eingefasst sein. Diese Ausgestaltung ist jedoch nicht zwingend.

An dem Träger der Handhabungsvorrichtung ist auch die Auswerteeinheit angeordnet, vorzugsweise in einem Einheitengehäuse angefasst, wobei das Einheitengehäuse an dem Träger befestigt ist.

Um eine schnelle Konfigurationsänderung der Anlage zu ermöglichen, ist der Träger vorzugsweise mittels eines Schnellwechselsystems (oder Schnellwechselkopplung) an dem Halteabschnitts der Anlage auswechselbar befestigt. Beispielsweise umfasst die Schnellwechselkopplung einen an dem Träger vorgesehenen Kopplungsabschnitt sowie einen an dem Halteabschnitt vorgesehenen, zugeordneten Kopplungsabschnitt. Die Auswerteeinheit kann z.B. in den trägerseitigen (d.h. am Träger vorgesehenen) Kopplungsabschnitt der Schnellwechselkopplung integriert sein.

Das Steuerventil, und/oder die Steuereinrichtung zur Ansteuerung des Steuerventils kann z.B. an dem Halteabschnitt der Anlage angeordnet sein und so gemeinsam für die anzuschließende Handhabungsvorrichtung wirken. Denkbar ist jedoch auch, dass das Steuerventil und/oder die Steuereinrichtung an den Träger der Handhabungsvorrichtung befestigt sind, sodass ein integriertes System gebildet ist.

Zur Übertragung der Steuersignale weist die Auswerteeinheit, das Steuerventil bzw. die Steuereinrichtung jeweils einander zugeordnete Signalschnittstellen auf, wobei die Signalschnittstellen mittels Datenübertragungsmitteln verbunden sind. Die Datenübertragungsmittel können Signalleitungen sein. Denkbar ist jedoch auch, dass es sich um drahtlose Datenübertragungsmittel wie Funkstrecken handelt.

Der Auswerteeinheit werden die Betriebsdaten vorzugsweise über einen Messzugang zugeführt. Denkbar ist, dass die Betriebsdaten mittels geeigneter Sensoren erfasst werden, welche z.B. an dem Unterdruckerzeuger, der Handhabungsvorrichtung und/oder dem wenigstens einen Unterdruckgreifer angeordnet sind. Die Sensoren können z.B. zur Erfassung von Druck, Volumenstrom oder ähnlichem ausgebildet sein.

Vorzugsweise ist das Steuerventil mit der zugeordneten Steuereinrichtung zu einer Baueinheit zusammengefasst, z.B. in einem gemeinsamen Gehäuse. Wie erläutert kann dieses auch an den Träger der Handhabungsvorrichtung oder an einem sonstigen Abschnitt der Anlage angeordnet sein. Die Ausgestaltung als intelligentes Steuerventil ermöglicht ein komfortables umrüsten und warten.

Andererseits ist denkbar, dass die Auswerteeinheit und die Steuereinrichtung zu einer Baueinheit zusammengefasst sind. Bei dieser Ausgestaltung ist Auswertung und Steuerung räumlich zusammengefasst, sodass nur kurze Signalwege erforderlich sind. Die Kombinationseinheit aus Auswerteeinheit und Steuereinrichtung kann mit dem Ventil über entsprechende Steuerleitungen oder drahtlose Datenübertragungsmittel verbunden sein.

In der Auswerteeinheit ist insbesondere eine Speichereinrichtung vorgesehen, mittels welcher Betriebsdaten der Unterdruckerzeuger und/oder der Handhabungsvorrichtung gespeichert werden. Insbesondere sind in der Speichereinrichtung Erkennungsdaten (ebenfalls als Betriebsdaten angesehen) hinterlegt, welche die Handhabungsvorrichtung identifizieren. Insofern kann die Auswerteeinheit auch als Erkennungseinheit für die Handhabungsvorrichtung wirken. Bei einem Austausch der Handhabungsvorrichtung an der Anlage können daher die Erkennungsdaten direkt ausgelesen werden, was dem Konfigurationsprozess vereinfacht.

Grundsätzlich sind die genannten Datenübertragungsmittel vorzugsweise derart ausgebildet, dass die Kommunikationsverbindung automatisch dadurch hergestellt wird, wenn die Handhabungsvorrichtung mit dem entsprechenden Halteabschnitt der Anlage verbunden wird. Vorzugsweise ist in die genannte Schnellwechselkopplung eine entsprechende Kommunikationsverbindungschnittstelle integriert, die automatisch verbunden wird, wenn die Handhabungsvorrichtung an der Anlage befestigt wird.

Das Steuerventil ist insbesondere als Proportionalventil ausgebildet, sodass der dem Unterdruckerzeuger zur Verfügung gestellte Fluiddruck und/oder der Durchfluss zum Unterdruckerzeuger stufenlos regelbar ist. Grundsätzlich kann das Steuerventil an dem Träger der Handhabungsvorrichtung oder aber an den Haltabschnitt der Anlage angeordnet sein.

Gemäß einem Verfahren zum Betreiben einer Anlage der vorstehend beschriebenen Art stellt die Anlage ein Druckluftversorgungssystem bereit, an welches die Handhabungsvorrichtung (umfassend wenigstens einen Unterdruckgreifer) angeschlossen ist. Der Anschluss erfolgt über einen mit Druckluft betreibbaren Unterdruckerzeuger (insbesondere ein Ejektor), welcher den Unterdruck für die Unterdruckgreifer bereitstellt.

Gemäß dem Verfahren werden Betriebsdaten betreffend den Unterdruckerzeuger und/oder die Handhabungsvorrichtung bereitgestellt und dezentral in einer an der Handhabungsvorrichtung vorgesehenen Auswerteeinheit ausgewertet. In Abhängigkeit der ausgewerteten Betriebsdaten werden Steuersignale zur Ansteuerung eines Steuerventils erzeugt. Das Steuerventil wirkt zwischen Druckluftversorgungssystem und Unterdruckerzeuger und steuert die Druckluftzufuhr in Abhängigkeit der von der Auswerteeinheit übermittelten Steuersignale.

Das Bereitstellen der Betriebsdaten kann wie erläutert mittels hinterlegter Daten der Auswerteeinheit oder mittels gemessener Daten betreffend den Unterdruckerzeuger und/oder die Handhabungsvorrichtung erfolgen.

Insbesondere sind in der Auswerteeinheit Soll-Werte für Betriebskenngrößen (insbesondere betreffend die Unterdruckgreifer und/oder die Unterdruckerzeuger) hinterlegt, wobei der Auswerteeinheit Ist-Werte für die Betriebskenngrößen als Betriebsdaten zugeführt werden, z.B. in Form von Messwerten. Die Ist-Werte können in der Auswerteeinheit mit den Soll-Werten abgeglichen werden und bei einem Unter- oder Überschreiben der Soll-Werte kann die Auswerteeinheit entsprechende Steuersignale an das Steuerventil bzw. an eine diesem zugeordnete Steuereinrichtung übermitteln.

Die Erfindung wird im Folgenden anhand der Figuren näher erläutert.

Es zeigen:
- Figur 1:: skizzierte Darstellung einer ersten Ausführungsform der Anlage;
- Figur 2:: skizzierte Darstellung einer weiteren Ausführungsform;

In der nachfolgenden Beschreibung sowie in den Figuren sind für identische oder einander entsprechende Merkmale jeweils dieselben Bezugszeichen verwendet.

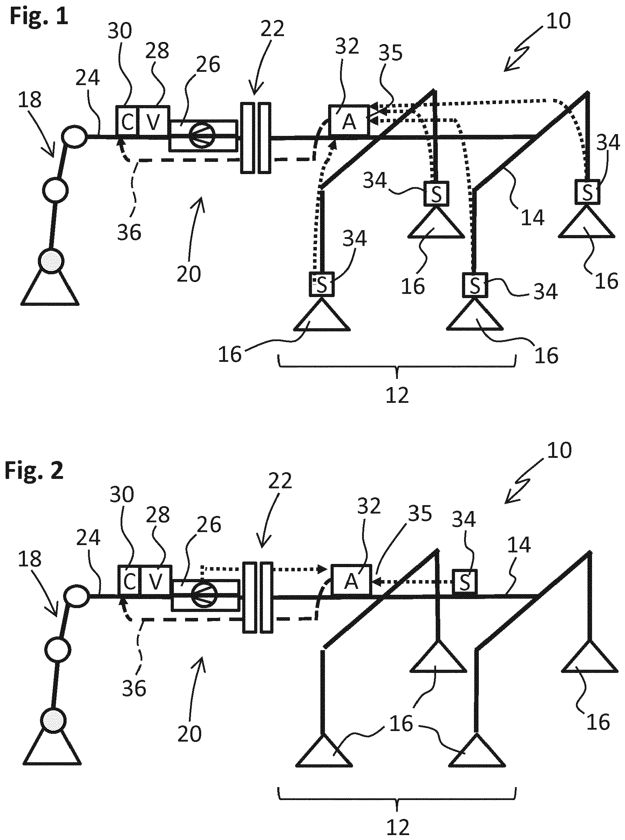

In den Figuren 1 und 2 ist jeweils eine Anlage 10 zur Handhabung eines nicht näher dargestellten Werkstückes gezeigt. Die Anlage 10 umfasst eine Handhabungsvorrichtung 12, die im dargestellten Beispiel als Saugerspinne ausgebildet ist. Die Handhabungsvorrichtung 12 umfasst einen gerüstartigen Träger 14, an welchem eine Mehrzahl von Unterdruckgreifern (hier: Sauggreifer) 16 zum Fixieren des Werkstückes angeordnet sind.

Die Anlage 10 umfasst außerdem einen Aktuator 18, welcher in der Art eines skizzierten Robotorarmes dargestellt ist. Dieser dient zum Bewegen der Handhabungsvorrichtung 12. An einem Halteabschnitt 20 das Aktuators 18 ist die Handhabungsvorrichtung 12 bspw. mittels einer Schnellwechselkopplung 22 befestigbar und lösbar angeordnet. Hierzu umfasst die Schnellwechselkopplung 22 je einen an dem Träger 14 und einen an dem Halteabschnitt 20 vorgesehenen Kopplungsabschnitt (in den Figuren jeweils durch vertikale Balken angedeutet).

Die Anlage 10 umfasst ein nicht näher dargestelltes Druckluftversorgungssystem 24, dass in den dargestellten Beispielen von Seiten des Aktuators 18 zugeführt wird. Der für die Unterdruckgreifer 16 erforderliche Unterdruck wird mittels eines Unterdruckerzeugers 26 erzeugt. Der Unterdruckerzeuger 26 generiert aus dem von dem Druckluftversorgungssystem 24 bereitgestellten Druckfluid (insbesondere Druckluft) einen Unterdruck, bspw. nachdem Saugstrahlpumpenprinzip. Insbesondere ist der Unterdruckerzeuger 26 als Ejektor ausgebildet. Es können auch mehrere Unterdruckerzeuger 26 vorgesehen sein.

Dem Unterdruckerzeuger 26 ist ein Steuerventil 28 fluidisch vorgestaltet. Das Steuerventil 28 steuert die dem Unterdruckerzeuger 26 zugeführte Volumenströmung und/oder den Druck. Das Steuerventil 28 ist bspw. als kontinuierlich steuerbares Proportionalventil ausgebildet. Zur Steuerung des Steuerventils ist diesem eine Steuereinrichtung 30 zugeordnet. Die Steuerrichtung 30 kann auch mehrere Steuerventile 28 ansteuern.

An der Handhabungsvorrichtung 12, insbesondere an dem Träger 14 in der Handhabungsvorrichtung 12 ist außerdem eine Auswerteeinheit 32 integriert. Wie nachfolgend noch näher erläutert, werden der Auswerteeinheit 32 Betriebsdaten betreffend den oder die Unterdruckerzeuger 26 und/oder betreffend die Handhabungsvorrichtung 12, insbesondere betreffend die Unterdruckgreifer 16 zugeführt. Die Auswerteeinheit 32 wertet diese Betriebsdaten aus und generiert hieraus Steuersignale, welche an die Steuereinrichtung 30 zur Ansteuerung des Steuerventils 28 übermittelt werden.

Die in den Figuren 1 und 2 dargestellten Anlagen 10 unterscheiden sich insbesondere dadurch, dass die verschiedenen Funktionseinheiten (z.B. Auswerteeinheit 32, Unterdruckerzeuger 26, Steuerventil 28, Steuereinrichtung 30, ...) an verschiedenen Positionen angeordnet sind und/oder zu unterschiedlichen Baueinheiten zusammengefasst sind. Der Unterdruckerzeuger 26 ist an dem Halteabschnitt 20 des Aktuators 16 angeordnet (vgl. Figuren 1 und 2). Das dem Unterdruckerzeuger 26 vorgeschaltete Steuerventil 28 ist ebenfalls an dem Halteabschnitt 20 angeordnet. Insbesondere ist denkbar, das Steuerventil 28 und Unterdruckerzeuger 26 zu einer Baueinheit zusammengefasst sind, bspw. in einem gemeinsamen Gehäuse. Die Steuereinrichtung 30 kann ebenfalls an dem Halteabschnitt 20 vorgesehen sein. Die Steuereinrichtung 30 kann auch mit dem Steuerventil 28 und/oder mit dem Unterdruckerzeuger 26 zu einer Baueinheit verbunden sein.

Die der Ansteuerung dienende Steuereinrichtung 30 kann einerseits mit dem Steuerventil 28 gemeinsam angeordnet sein (vgl. Figuren 1 und 2), andererseits kann die Steuereinrichtung 30 gemeinsam mit der Auswerteeinheit 32 an der Handhabungsvorrichtung 12 angeordnet sein, insbesondere mit der Auswerteeinrichtung 32 zu einer Baueinheit verbunden sein. Beide Ausgestaltungen bieten strukturelle Vorteile, da einerseits die Steuereinrichtung 30 der Ansteuerung des Steuerventils 28 dient, andererseits die Steuereinrichtung 30 die entsprechenden Steuersignale von der Auswerteeinheit 32 erhält.

Zur Ermittlung der Betriebsdaten sind insbesondere Sensoren 34 vorgesehen, welche bspw. unmittelbar dem Unterdruckgreifer 16 zugeordnet sind (vgl. Figur 1) und/oder unmittelbar dem Unterdruckerzeuger 26 zugeordnet sind. Es kann sich auch um Sensoren 34 handeln, die an der Handhabungsvorrichtung 12 (z.B. am Träger 14) angeordnet sind, bspw. um die Annäherung eines Werkstückes zu detektieren. Die ermittelten Betriebsdaten werden von den Sensoren der Auswerteeinheit 32 zugeführt. Hierfür kann die Auswerteeinheit 32 entsprechende Messeingänge 35 aufweisen. Die Zufuhr der Betriebsdaten von den Sensoren 34 über die Messeingänge 35 ist in den Figuren mit punktierter Linie dargestellt.

Die Auswerteeinheit 32 überträgt die aus den Betriebsdaten erzeugten Steuersignale über geeignete Datenübertragungsmittel 36 an die Steuereinrichtung 30 bzw. an das Steuerventil 28. Hierbei sind verschiedene Ausgestaltungen möglich. Die Figuren 1 und 2 zeigen Datenübertragungsmittel 36, welche bei Verbindung der Schnellwechselkopplung 22 eine Kommunikationsverbindung zwischen Auswerteeinheit und Steuereinrichtung 30 herstellen. Diese Datenübertragungsmittel 36 können z.B. Datenleitungen sein.

Bei einer Ausgestaltung, bei welcher die Steuereinrichtung 30 eine Baueinheit mit der Auswerteeinheit 32 bildet, können die Steuersignale auch drahtlos an das Steuerventil 28 übertragen werden.

Bei einer Ausgestaltung, bei welcher die Steuereinrichtung 30 gemeinsam mit dem Steuerventil angeordnet ist, erfolgt die drahtlose Datenübertragung zwischen der Auswerteeinheit 32 und der Steuereinrichtung 30. Die Datenübertragungsmittel 36 können bspw. in den Träger 14 der Handhabungsvorrichtung 12 integriert sein, bspw. als fest verlegte Steuerleitungen.

Zur Übertragung der Steuersignale weisen die Auswerteeinheit 32, die Steuereinrichtung 30 und ggf. das Steuerventil 28 entsprechende Signalschnittstellen auf (nicht näher dargestellt).

## Patentansprüche

1. Anlage (10) zur Handhabung von Werkstücken,
- mit einer Handhabungsvorrichtung (12), welche wenigstens einen Unterdruckgreifer (16) zum Ansaugen eines Werkstückes umfasst,
- mit wenigstens einem mittels Druckluftzufuhr betreibbaren Unterdruckerzeuger (26) zur Versorgung des Unterdruckgreifers (16) mit Unterdruck,
- mit wenigstens einem ansteuerbaren Steuerventil (28), mittels welchem die Druckluftzufuhr zu dem Unterdruckerzeuger (26) steuerbar ist,
wobei dem Steuerventil (28) eine Steuereinrichtung (30) zur bedarfsgerechten Ansteuerung des Steuerventils (28) zugeordnet ist,
wobei die Handhabungsvorrichtung eine Auswerteeinheit (32) zur Auswertung von Betriebsdaten des Unterdruckerzeugers (26) und/oder von Betriebsdaten der Handhabungsvorrichtung (12) sowie zur Erzeugung von Steuersignalen in Abhängigkeit der ausgewerteten Betriebsdaten aufweist,
wobei die Steuereinrichtung (30) das Steuerventil (28) in Abhängigkeit der von der Auswerteeinheit (32) übermittelten Steuersignale ansteuert,
wobei die Handhabungsvorrichtung (12) einen Träger (14) aufweist, wobei der Träger (14) an einem Halteabschnitt (20) der Anlage befestigbar und lösbar ausgebildet ist,
wobei der wenigstens eine Unterdruckgreifer (16) und
die Auswerteeinheit (32) an dem Träger (14) angeordnet sind,
**dadurch gekennzeichnet, dass** der wenigstens eine Unterdruckerzeuger (26) an dem Halteabschnitt (20) der Anlage angeordnet ist.

2. Anlage nach Anspruch 1, **dadurch gekennzeichnet, dass** an dem Träger (14) eine Mehrzahl von Unterdruckgreifern (16) befestigt ist..

3. Anlage nach Anspruch 1 oder 2, **dadurch gekennzeichnet, dass** der Träger (14) auswechselbar mittels einer Schnellwechselkopplung (22) an dem Halteabschnitt (20) befestigt ist.

4. Anlage nach einem der vorigen Ansprüche, **dadurch gekennzeichnet, dass** die Auswerteeinheit (32) an einem an dem Träger (14) vorgesehenen Kopplungsabschnitt der Schnellwechselkopplung (22) angeordnet ist.

5. Anlage nach einem der vorigen Ansprüche, **dadurch gekennzeichnet, dass** das Steuerventil (28) und/oder die Steuereinrichtung (30) an einem Halteabschnitt (20) der Anlage angeordnet ist, an welchem die Handhabungsvorrichtung (12) befestigbar ist.

6. Anlage nach einem der vorigen Ansprüche, **dadurch gekennzeichnet, dass** die Auswerteeinheit (32) und/oder das Steuerventil (28) und/oder die Steuereinrichtung (30) jeweils zugeordnete Signalschnittstellen zur Übertragung der Steuersignale aufweist, wobei die Signalschnittstellen miteinander mittels Datenübertragungsmitteln (36) verbunden sind.

7. Anlage nach dem vorigen Anspruch, **dadurch gekennzeichnet, dass** die Datenübertragungsmittel (36) derart ausgebildet sind, dass eine Verbindung hergestellt wird, wenn die Handhabungsvorrichtung an der Anlage angeordnet wird.

8. Anlage nach einem der vorigen Ansprüche, **dadurch gekennzeichnet, dass** die Auswerteeinheit (32) wenigstens einen Messeingang (35) zur Aufnahme der Betriebsdaten des Unterdruckerzeugers (26) und/oder der Handhabungsvorrichtung (12) aufweist.

9. Anlage nach einem der vorigen Ansprüche, **dadurch gekennzeichnet, dass** der Unterdruckerzeuger (26) und/oder die Handhabungsvorrichtung (12) und/oder der Unterdruckgreifer (16) Sensoren (34) zur Erfassung von Betriebsdaten aufweist.

10. Anlage nach einem der vorigen Ansprüche, **dadurch gekennzeichnet, dass** die Steuereinrichtung (30) mit dem Steuerventil (28) zu einer Baueinheit zusammengefasst ist.

11. Anlage nach einem der vorigen Ansprüche, **dadurch gekennzeichnet, dass** die Auswerteeinheit (32) eine Speichereinrichtung aufweist, in welcher Betriebsdaten des wenigstens einen Unterdruckerzeugers (20) und/oder Handhabungsvorrichtung (12) speicherbar sind.

12. Anlage nach einem der vorigen Ansprüche, **dadurch gekennzeichnet, dass** das Steuerventil (28) ein Proportionalventil umfasst.

## Claims

1. Installation (10) for handling workpieces,
- comprising a handling device (12) which has at least one vacuum gripper (16) for suctioning a workpiece,
- comprising at least one vacuum generator (26) for supplying the vacuum gripper (16) with a vacuum, which vacuum generator can be operated by means of a compressed air supply,
- comprising at least one controllable control valve (28), by means of which the compressed air supply to the vacuum generator (26) can be controlled, a control apparatus (30) for actuating the control valve (28) as required being assigned to the control valve (28), the handling device comprising an evaluation unit (32) for evaluating operating data of the vacuum generator (26) and/or operating data of the handling device (12) and for generating control signals depending on the evaluated operating data, the control apparatus (30) controlling the control valve (28) depending on the control signals transmitted by the evaluation unit (32), the handling device (12) comprising a carrier (14), it being possible for the carrier (14) to be attached to and detached from a holding portion (20) of the installation, the at least one vacuum gripper (16) and the evaluation unit (32) being arranged on the carrier (14), **characterized in that** the at least one vacuum generator (26) is arranged on the holding portion (20) of the installation.

2. Installation according to claim 1, **characterized in that** a plurality of vacuum grippers (16) are attached to the carrier (14).

3. Installation according to claim 1 or claim 2, **characterized in that** the carrier (14) is exchangeably attached to the holding portion (20) by means of a quick-change coupling (22).

4. Installation according to any of the preceding claims, **characterized in that** the evaluation unit (32) is arranged on a coupling portion of the quick-change coupling (22) that is provided on the carrier (14).

5. Installation according to any of the preceding claims, **characterized in that** the control valve (28) and/or the control apparatus (30) is arranged on a holding portion (20) of the system to which the handling device (12) can be attached.

6. Installation according to any of the preceding claims, **characterized in that** the evaluation unit (32) and/or the control valve (28) and/or the control apparatus (30) each comprise assigned signal interfaces for transmitting the control signals, the signal interfaces being connected to one another by means of data transmission means (36).

7. Installation according to the preceding claim, **characterized in that** the data transmission means (36) are designed such that a connection is established when the handling device is arranged on the installation.

8. Installation according to any of the preceding claims, **characterized in that** the evaluation unit (32) comprises at least one measurement input (35) for receiving the operating data of the vacuum generator (26) and/or the handling device (12).

9. Installation according to any of the preceding claims, **characterized in that** the vacuum generator (26) and/or the handling device (12) and/or the vacuum gripper (16) comprises sensors (34) for capturing operating data.

10. Installation according to any of the preceding claims, **characterized in that** the control device (30) is combined with the control valve (28) to form a modular unit.

11. Installation according to any of the preceding claims, **characterized in that** the evaluation unit (32) comprises a storage device in which operating data of the at least one vacuum generator (20) and/or handling device (12) can be stored.

12. Installation according to any of the preceding claims, **characterized in that** the control valve (28) has a proportional valve.

## Revendications

1. Installation (10) pour la manipulation de pièces,
- avec un dispositif de manipulation (12), lequel comprend au moins un dispositif de préhension par aspiration (16) servant à aspirer une pièce,
- avec au moins un générateur de vide (26) pouvant fonctionner au moyen d'une amenée d'air comprimé, servant à alimenter le dispositif de préhension par aspiration (16) en vide,
- avec au moins une soupape de commande (28) pouvant être commandée, au moyen de laquelle l'amenée d'air comprimé au générateur de vide (26) peut être commandée,
dans laquelle un dispositif de commande (30) servant à commander la soupape de commande (28) en fonction des besoins est associé à la soupape de commande (28),
dans laquelle le dispositif de manipulation présente une unité d'évaluation (32) servant à évaluer des données de fonctionnement du générateur de vide (26) et/ou des données de fonctionnement du dispositif de manipulation (12) ainsi qu'à générer des signaux de commande en fonction des données de fonctionnement évaluées,
dans laquelle le dispositif de commande (30) commande la soupape de commande (28) en fonction des signaux de commande transmis par l'unité d'évaluation (32),
dans laquelle le dispositif de manipulation (12) présente un support (14), dans laquelle le support (14) est réalisé de manière à pouvoir être fixé sur une partie de retenue (20) de l'installation et détaché,
dans laquelle l'au moins un dispositif de préhension par aspiration (16) et l'unité d'évaluation (32) sont disposés sur le support (14),
**caractérisée en ce que**
l'au moins un générateur de vide (26) est disposé sur la partie de retenue (20) de l'installation.

2. Installation selon la revendication 1, **caractérisée en ce qu'**une pluralité de dispositifs de préhension par aspiration (16) est fixée sur le support (14).

3. Installation selon la revendication 1 ou 2, **caractérisée en ce que** le support (14) est fixé sur la partie de retenue (20) de manière interchangeable au moyen d'un accouplement à changement rapide (22).

4. Installation selon l'une quelconque des revendications précédentes, **caractérisée en ce que** l'unité d'évaluation (32) est disposée sur une partie d'accouplement, prévue sur le support (14), de l'accouplement à changement rapide (22).

5. Installation selon l'une quelconque des revendications précédentes, **caractérisée en ce que** la soupape de commande (28) et/ou le dispositif de commande (30) sont disposés sur une partie de retenue (20) de l'installation sur laquelle le dispositif de manipulation (12) peut être fixé.

6. Installation selon l'une quelconque des revendications précédentes, **caractérisée en ce que** l'unité d'évaluation (32) et/ou la soupape de commande (28) et/ou le dispositif de commande (30) présentent des interfaces de signal respectivement associées servant à transmettre les signaux de commande, dans laquelle les interfaces de signal sont reliées les unes aux autres au moyen de moyens de transmission de données (36).

7. Installation selon la revendication précédente, **caractérisée en ce que** les moyens de transmission de données (36) sont réalisés de telle sorte qu'une liaison est établie lorsque le dispositif de manipulation est disposé sur l'installation.

8. Installation selon l'une quelconque des revendications précédentes, **caractérisée en ce que** l'unité d'évaluation (32) présente au moins une entrée de mesure (35) servant à enregistrer les données de fonctionnement du générateur de vide (26) et/ou du dispositif de manipulation (12).

9. Installation selon l'une quelconque des revendications précédentes, **caractérisée en ce que** le générateur de vide (26) et/ou le dispositif de manipulation (12) et/ou le dispositif de préhension par aspiration (16) présentent des capteurs (34) servant à acquérir des données de fonctionnement.

10. Installation selon l'une quelconque des revendications précédentes, **caractérisée en ce que** le dispositif de commande (30) est réuni à la soupape de commande (28) en une unité modulaire.

11. Installation selon l'une quelconque des revendications précédentes, **caractérisée en ce que** l'unité d'évaluation (32) présente un dispositif mémoire dans lequel des données de fonctionnement de l'au moins un générateur de vide (20) et/ou dispositif de manipulation (12) peuvent être mises en mémoire.

12. Installation selon l'une quelconque des revendications précédentes, **caractérisée en ce que** la soupape de commande (28) comprend une soupape proportionnelle.
